# EUROPEAN PATENT SPECIFICATION

(11) **EP 0 371 725 B1**
(45) Date of publication and mention of the grant of the patent: **15.09.1993**
(21) Application number: 89312285.3
(22) Date of filing: 27.11.1989
(51) Int. Cl.: A23L 1/00

(54) **Method of preparing a food product**
Verfahren zur Herstellung eines Nahrungsmittels
Méthode pour la préparation d'un produit alimentaire

(30) Priority: 28.11.1988 GB 8827696
(43) Date of publication of application: 06.06.1990
(73) Proprietor: UNILEVER PLC, London EC4P 4BQ (GB); UNILEVER N.V., 3013 AL Rotterdam (NL)
(72) Inventor: Birch, Robert Charles, Wellingborough Northants (GB); Stringer, John Vincent, Rushden Northants, NN10 0LY (GB)
(74) Representative: Ford, Michael Frederick

(56) References cited:
- EP-A- 0 339 784
- US-A- 3 346 387
- US-A- 3 698 914
- US-A- 4 251 560
- Hawley's Chem. Dict. 11th Ed., Van Nostrand Reinhold, New York, p.1089-1090

## Description

The invention relates to a method of preparing a food product. In particular, it relates to a method of preparing a vegetable product with a light aerated structure.

Many vegetables are consumed in a normal diet, including for example potato. It can be eaten in a variety of forms, such as French fries, that is sticks of fried potato, mashed potato, etc. One of the problems associated with mashed potato, is the time it takes to prepare such a product. The preparation involves several steps, namely removing the skin from the potato, cooking the potato, such as by boiling in water, and mashing the potato and mixing with a liquid, such as milk or water in order to obtain a light creamy product. Furthermore, mashed potato once prepared may lose its characteristic properties after being frozen and subsequently thawed. Powdered mashed potato product which can be reconstituted with water to give an instant potato product is available. However, the texture and taste of the reconstituted powdered product does not compare favourably with freshly prepared natural product. The problems above are not uncommon with regard to the preparation for consumption of other types of vegetable, in particular preparations which involve a freezing step.

Light aerated food products are well known in the art as souffles. Such products are generally prepared by forming a mixture of fat, flour and milk or water to which the yolks and whites of eggs, beaten separately, are added. On heating, the mixture expands to give a product with a light, aerated structure.

One of the disadvantages associated with this method is that it involves several mixing stages. In particular, if the egg white is not beaten sufficiently before being added to the mixture of fat, flour and milk or water, then the product will not attain the required aerated structure during baking.

European Patent Specification 71 054 describes a method for the preparation of a frozen souffle product which involves the use of carbon dioxide to aerate the mixture. However, this method suffers from the disadvantage that the degree of mixing of individual components of the souffle is critical; mixing has to be carried out so that air incorporation is avoided.

Copending European Patent Application 0,339,784 described a method for preparing a food product by preparing a mixture comprising 5-20% (wt) of gelatinised starch and 0.1-2.5% (wt) of a film former and aerating the mixture to an overrun of more than 10%. This application falls under Article 54, paragraph 3 EPC.

US 4,251,560 described a process for preparation of a frozen whipped topping composition containing milk fat, which upon thawing has an extended refrigerator shelf life while maintaining its volume, texture and eating properties. US 4,251,560 teaches that it is critical that the essential starch component is modified by cross-linking and hydroxypropylation.

It is an object of the present invention to prepare an aerated vegetable product which has a different taste and texture compared to for example mashed potato, and which can retain its structure after being frozen and subsequently reheated. The method is appropriate for the preparation of a wide variety of aerated food products which contain naturally, or have added a quantity of gelatinised starch.

Thus according to the invention there is provided a method for preparing an aerated vegetable product comprising mixing with an aqueous liquid:
(a) vegetable comprising
   (i) potato; and
   (ii) an additional vegetable selected from sweetcorn, pea and carrot;
   the vegetable comprising natural or added gelatinised starch.
(b) liquid oil; and
(c) proteinaceous heat-setting material;
aerating the mixture with a gaseous material and thereafter heat-treating the aerated vegetable product to pre-set the structure.

An advantage of the present invention over the methods described above for the preparation of traditional light aerated products, such as souffle products, is that it is more convenient and adaptable to large scale commercial use. Mixing can be carried out in a single step and the degree of mixing is not critical. Furthermore, egg yolk is not an essential component of the aerated food product of the invention.

The main advantage is that products made according to the invention can be pre-set and stored prior to consumption, if preferred in containers which may be open to the atmosphere, without significant loss of the aerated structure.

A further advantage of the invention is that it provides a method for the preparation of food products with a low calorific value.

The gelatinised starch component can be any edible vegetable starch, such as potato starch, rice starch, wheat starch, maize starch, sweetcorn starch, carrot starch, or pea starch, but is preferably potato starch. Irrespective of whether the natural starch content of a vegetable treated according to the invention is sufficient to work the invention, this natural starch content may be enhanced; as a result, mixtures of the foregoing starch components in a vegetable product according to the invention can therefore also be used. Mashed potato, prepared either from granules, flakes, or freshly cooked potatoes, is preferably used as the source of potato starch.

The heat-setting agent sets the aerated structure, and is a protein, such as milk protein, soy protein, gluten, fish protein, gelatin and egg albumen, or mixtures thereof. The protein can be fresh or rehydrated.

By liquid oil we include any edible liquid vegetable or animal oil which acts as a solubiliser for the gaseous material, or a low calorie fat replacer; examples of liquid oils include liquid butter or fish oil. At least part of the oil in the liquid oil component may be replaced by a liquid low-calorie fat-replacer. Particularly suitable fat replacers are the edible polyesters of polyhydric alcohols having at leat four free hydroxyl groups, such as polyglycerols, sugars or sugar alcohols, and saturated or unsaturated, straight or branched alkyl chain C₈-C₂₄ fatty acids. The polyhydric alcohol fatty acid polyesters include any such polyesters or mixtures thereof of which, on an average, at least 70% of the polyhydric alcohol hydroxyl groups have been esterified with the fatty acids. Also fatty alkyl ether derivatives of glycerol, esters of C₈-C₂₄ fatty alcohols and polycarboxylic acids can be used for replacing at least part of the oil. Preferably the liquid oil is a liquid vegetable oil, such as groundnut or sunflower oil.

In a preferred embodiment the aqueous liquid consists of water. It can be added separately to the mixture containing the vegetable comprising natural or added gelatinised starch, liquid oil and proteinaceous heat-setting material, or it may be added indirectly if a hydrated gelatinised starch is used.

The aerated food product can also contain any number of optional ingredients such as seasoning ingredients, for example salt, pepper, nutmeg, parsley or any other herbs.

The gelatinised starch is preferably present at a solids level of 5 to 20%, more preferably 10 to 20%, and the proteinaceous heat-setting agent is present at a level of 5-20% by weight. The liquid oil is preferably present at a level of 3-30%, more preferably 5-15%, most preferably 7-10% by weight. The balance is aqueous liquid and optional ingredients.

In the method according to the invention the vegetable comprising natural or added gelatinised starch, liquid oil and proteinaceous heat-setting agent are initially mixed together with an aqueous liquid. Mixing can be carried out in most types of food mixer such as planetary, scroll or paddle mixers. The order of addition of individual components prior to mixing is not critical.

Preferably the components are mixed for 1-4 minutes at a temperature within the range from 5 to 30°C. The mixture is then transferred to an enclosed mixer and the gaseous material is added at a pressure of between 2.0 x 10⁵ and 4 x 10⁵ Pa at a temperature of not more than 30°C. Preferably the gaseous material is incorporated into the mixture at a temperature of 10°C for 0.5-2.0 minutes.

The gaseous material can be any gas which is soluble in the liquid oil. It is preferably carbon dioxide, nitrous oxide or nitrogen. Upon release of the pressure, most of the dissolved gas comes out of solution forming a food product which is caused to expand like a foam. For a unit volume, the degree of aeration is called the overrun, which is defined as 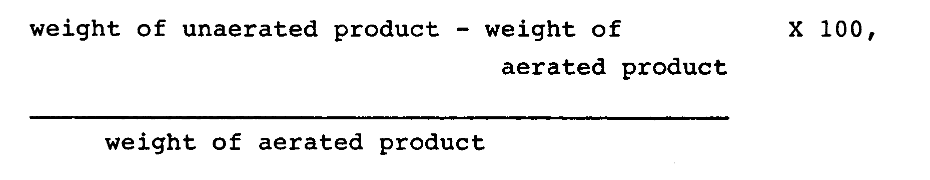
and is preferably from 5 to 100%, conveniently 10 to 100%.

Prior to storage, the aerated food product is treated to set the aerated structure. The structure can be set by a variety of methods including heating in a conventional oven, grilling, frying or fast freezing. Preferably the structure is set by either heating the product in a microwave oven, or steam setting. These last two methods have the advantage that fast and thorough setting of the entire product can be achieved without causing the formation of a dry crust.

Generally the aerated product is sub-divided into individual portions suitable for consumption prior to setting and storage. The product can be dosed into containers, which can withstand the conditions required for setting and storage. In another embodiment product is dosed into receptacles on a conveyer belt which continuously passes through, for example, a microwave oven. Individual portions preferably contain from 20 to 200g of food product.

If a microwave oven with an output of 700 watts is used to set the food product, a typical treatment time for an individual portion is from 20 to 200 seconds. If a microwave oven with a different output is used the treatment time is adjusted accordingly.

After being set the products are sorted. They can be stored at ambient temperatures, at frozen temperatures or under chill conditions depending on the storage time and the packaging material. In a preferred embodiment the product is dosed into a container, pre-set, demoulded and then packaged in a further wrap or container before or after being frozen to temperatures of between -5 to -30°C.

After storage, and prior to consumption, the product is preferably reheated in a conventional or microwave oven. If the product is frozen during storage, it should preferably be reheated directly and without defrosting. Typically the heating time in a conventional oven for a portion of a product containing from 50 to 200g of material, is from 5 to 50 minutes at a temperature from 150 to 220°C.

In addition to products comprising solely aerated vegetable, aerated vegetable may be co-formed with one or more additional food components, such as meat, cheese, vegetable or sauce, or any combination thereof. Co-forming techniques may comprise, for example, coextrusion, providing one or more partially or fully enrobed fillings, or providing one or more toppings. Any one or more of the above co-forming techniques may be used in the same product, and may utilize one or more additional food components.

The invention is further illustrated by the following Examples.

### Example 1

Food products are prepared according to the following composition:

| | % by weight |
|---|---|
| Sweetcorn puree | 40-60% |
| Potato mash | 15-25% |
| Sunflower oil | 5-20% |
| 30% rehydrated egg white | 5-20% |
| Seasonings | 0-1% |

Using a Hobart mixer and paddle, the sweetcorn puree and seasonings are mixed together for 15 seconds. The rehydrated egg white is then added, and the mixture is further mixed for another 30 seconds. Then the sunflower oil is added, and the mixture mixed until the sunflower oil is absorbed, in practice around 30-60 seconds. Then the potato mash is added, and the mixture finally mixed for another minute. Although the mixing regime described above is preferred, its steps are by no means critical.

The mixture thus formed was transferred to a scraped surface heat exchanger and carbon dioxide gas was added at a pressure of 3 x 10⁵ Pa (ie the pressure at the interface between the gas and the mixture) at 10°C. The mixture was mixed for 1 minute. An aerated product was produced when the pressure was released on dosing the product into containers stable to microwave heating, with each containing approximately 80 grams of product, and subsequently set by heating in a microwave oven with an output of 700 watts for 80 seconds. After demoulding, the product was blast frozen and stored in a polyethylene bag at about -18°C. Prior to consumption, the frozen aerated product was heated in a conventional oven at 180°C for 25 minutes. The product had a light aerated structure.

The product thus prepared was perceived by consumers to have an interesting taste and texture.

### Example 2

Food products are prepared according to the following composition;

| | % by weight |
|---|---|
| Pea puree | 50-70% |
| Pea flour | 6-12% |
| Potato mash | 10-20% |
| Bechamel sauce | 5-15% |
| Sunflower oil | 5-20% |
| 30% rehydrated egg white | 5-20% |
| Seasoning | 0-1% |

Using a Hobart mixer and paddle, the pea puree, bechamel sauce and seasonings are mixed for 15 seconds. To this is added the rehydrated egg white, and the mixture mixed for 30 seconds. Next the sunflower oil is added and the mixture mixed for a further 30-60 seconds, and finally the peaflour is added, whereupon the mixture is mixed for a further minute. Although the mixing regime described above is preferred, its steps are by no means critical

The mixture thus formed was transferred to a scrapped surface heat exchanger and carbon dioxide gas was added at a pressure of 3 x 10⁵ Pa (ie the pressure at the interface between the gas and the mixture) at 10 °C. The mixture was mixed for 1 minute. An aerated product was produced when the pressure was released on dosing the product into containers stable to microwave heating, with each containing approximately 80 grams of product, and subsequently set by heating in a microwave oven with an output of 700 watts for 80 seconds. After demoulding, the product was blast frozen and stored in a polyethylene bag at about -18 °C. Prior to consumption, the frozen aerated product was heated in a conventional oven at 180 °C for 25 minutes. The product has a light aerated structure.

The product thus prepared was perceived by consumers to have an interesting taste and texture.

## Claims

1. A method for preparing an aerated vegetable product comprising mixing with an aqueous liquid;
(a) vegetable comprising
(i) potato; and
(ii) an additional vegetable selected from sweetcorn, pea and carrot; the vegetable comprising natural or added gelatinised starch
(b) liquid oil; and
(c) proteinaceous heat-setting material;
aerating the mixture with a gaseous material and thereafter heat-treating the aerated vegetable product to pre-set the structure.

2. A method according to any preceding claim wherein the aerated product is treated to pre-set the aerated structure prior to storage.

3. A method according to claim 2 wherein the aerated product is pre-set in a microwave oven.

4. A method according to any preceding claim wherein the gaseous material is selected from nitrous oxide, carbon dioxide or nitrogen.

5. A method according to claim 1 wherein the mixture is aerated to an overrun of more than 5%.

6. A method according to claim 5 wherein the mixture is aerated to an overrun of more than 10%.

7. An aerated vegetable product prepared according to claim 1, comprising vegetable comprising 5-20% natural or added gelatinised starch, 3-30% liquid oil and 5-20% of a heat-setting agent by weight of the product.

8. An aerated vegetable product according to claim 7, wherein the vegetable starch content is 10-20%.

9. An aerated vegetable product according to claim 7 or claim 8 co-formed with one or more additional food components, comprising for example meat, cheese, vegetable or sauce.

10. An aerated vegetable product according to claim 9 wherein co-forming comprises filling, topping, or coextrusion, or any combination thereof.

## Patentansprüche

1. Ein Verfahren zur Herstellung eines lufthaltigen Gemüseerzeugnisses, das umfaßt das Mischen mit einer wässrigen Flüssigkeit
(a) von Gemüse, das
(i) Kartoffel, und
(II) ein weiteres Gemüse, ausgewählt aus Süßmais, Erbse und Karotte, umfaßt, wobei das Gemüse natürliche oder zugegebene gelatinisierte Stärke enthält,
(b) flüssigem Öl, und
(c) eiweißhaltigem, heißfixierendem Material;
Durchlüften der Mischung mit einem gasförmigen Material, und danach Wärmebehandeln des lufthaltigen Gemüseerzeugnisses, um die Struktur zu vorzufixieren.

2. Ein Verfahren nach einem vorhergehenden Anspruch, wobei das lufthaltige Erzeugnis behandelt wird, um die lufthaltige Struktur vor der Lagerung vorzufixieren.

3. Ein Verfahren nach Anspruch 2, wobei das lufthaltige Erzeugnis in einem Mikrowellenofen vorfixiert wird.

4. Ein Verfahren nach einem vorhergehenden Anspruch, wobei das gasförmige Material aus Distickstoffoxid, Kohlendioxid und Stickstoff ausgewählt wird.

5. Ein Verfahren nach Anspruch 1, wobei die Mischung bis zu einem Überfluß von mehr als 5% durchlüftet wird.

6. Ein Verfahren nach Anspruch 5, wobei die Mischung bis zu einem Überfluß von mehr als 10% durchlüftet wird.

7. Ein lufthaltiges Gemüseerzeugnis, hergestellt nach Anspruch 1, das Gemüse, das 5-20% natürliche oder zugegebene gelatinisierte Stärke enthält, 3-30% flüssiges Öl und 5-20% eines hitzefixierenden Mittels an Gewicht des Erzeugnisses umfaßt.

8. Ein lufthaltiges Gemüseerzeugnis nach Anspruch 7 wobei der Gemüsestärkegehalt 10-20% beträgt.

9. Ein lufthaltiges Gemüseerzeugnis nach Anspruch 7 oder Anspruch 8, mitgeformt mit einer oder mehreren weiteren Nahrungskomponenten, umfassend zum Beispiel Fleisch, Käse, Gemüse oder Sauce.

10. Ein lufthaltiges Gemüseerzeugnis nach Anspruch 9, wobei das Mitformen Füllen, Toppen oder Koextrusion oder eine Kombination davon umfaßt.

## Revendications

1. Un procédé de préparation d'un produit de légumes aéré comprenant le fait de mélanger avec un liquide aqueux ;
(a) des légumes comprenant
(i) de la pomme de terre ; et
(ii) un autre légume sélectionné à partir du maïs doux, des petits pois et des carottes ; le légume comprenant de l'amidon naturel ou gélatiné ajouté
(b) de l'huile liquide ; et
(c) un matériau protéiné prenant à la chaleur ;
le fait d'aérer le mélange avec un matériau gazeux puis ensuite de traiter thermiquement le produit de légumes aéré afin de pré-définir la structure.

2. Un procédé selon la revendication précédente dans lequel le produit aéré est traité afin de pré-définir la structure avant le stockage.

3. Un procédé selon la revendication 2, dans lequel le produit aéré est pré-défini dans un four à micro-ondes.

4. Un procédé selon l'une des revendications précédentes, dans lequel le matériau gazeux est sélectionné à partir de l'oxyde nitreux, du dioxyde de carbone ou de l'azote.

5. Un procédé selon la revendication 1, dans lequel le mélange est aéré à un degré d'aération de plus de 5 %.

6. Un procédé selon la revendication 5, dans lequel le mélange est aéré à un degré d'aération de plus de 10 %.

7. Un produit de légumes aéré préparé en accord avec la revendication 1, comprenant des légumes comprenant 5 - 20 % d'amidon naturel ou gélatiné ajouté, 3 - 30 % d'huile liquide et 5 - 20 % d'un agent prenant à la chaleur, par rapport à la masse totale du produit.

8. Un produit de légumes aéré selon la revendication 7, dans lequel la teneur en amidon végétal est de 10 - 20 %.

9. Un produit de légumes aéré selon la revendication 7 ou 8, co-formé avec un ou plusieurs composants alimentaires supplémentaires, comprenant par exemple de la viande, du fromage, des légumes ou de la sauce.

10. Un produit de légumes aéré selon la revendication 9, dans lequel la co-formation comprend le remplissage, la garniture ou la co-extrusion, ou toute combinaison de ceux-ci.
